# EUROPÄISCHE PATENTSCHRIFT

(11) **EP 1 298 664 B1**
(45) Veröffentlichungstag und Bekanntmachung des Hinweises auf die Patenterteilung: **06.09.2006**
(21) Anmeldenummer: 02016529.6
(22) Anmeldetag: 24.07.2002
(51) Int. Cl.: G11B 27/031, G11B 27/034, H04L 29/06, G06F 17/30

(54) **Verfahren zum Erzeugen von Multimedia-Inhalten aus mehreren Multimedia-Elementen**
Method to create multimedia content using several multimedia elements
Procédé de création du contenu multimédia utilisant plusieurs éléments multimédia

(30) Priorität: 20.09.2001 DE 10146255
(43) Veröffentlichungstag der Anmeldung: 02.04.2003
(73) Patentinhaber: Deutsche Telekom AG, 53113 Bonn (DE)
(72) Erfinder: Kirchherr, Ralf, 63225 Langen (DE); Stegmann, Joachim, Dr., 64289 Darmstadt (DE)

(56) Entgegenhaltungen:
- WO-A-98/48363
- WO-A-98/58478
- US-A1- 2001 004 417
- HUNG Y-C: "A HYPERVIDEO SYSTEM GENERATOR" SOFTWARE PRACTICE & EXPERIENCE, JOHN WILEY & SONS LTD. CHICHESTER, GB, Bd. 27, Nr. 11, 1. November 1997 (1997-11-01), Seiten 1263-1281, XP000703783 ISSN: 0038-0644

## Beschreibung

Die Erfindung betrifft ein Verfahren zum Erzeugen von Multimedia-Inhalten aus mehreren Multimedia-Elementen gemäß der im Oberbegriff des Anspruches 1 angegebenen Art sowie einer Anordnung zur Durchführung des Verfahrens.

Es ist bekannt, Multimedia-Inhalte, die aus mehreren Multimedia-Elementen, wie Einzelbilder/Graphiken, Texte, URLs/Links, Bewegtbilder und/oder Audiosignale u.ä., bestehen, über ein Kommunikationsnetz, wie Internet oder Intranet, verschiedenen Nutzern zu übermitteln. Für die Übermittlung dieser Multimedia-Inhalte gibt es unterschiedliche Streaming-Verfahren. Durch diese Streaming-Verfahren ist es möglich, beliebige Multimedia-Inhalte quasi kontinuierlich zu übertragen, sodass die Multimedia-Inhalte schon während der Übermittlung präsentiert werden können, ohne diese vorher vollständig über das Internet von einem Server herunterladen zu müssen.

Die bekannten Streaming-Verfahren benutzen dazu sogenannte Plug-Ins, die auf einem Rechner, auf dem die Multimedia-Inhalte dargestellt werden sollen, zuvor installiert werden. Dies führt dazu, dass der Nutzer stets die neueste Version der Plug-Ins bereit halten muss, um die Inhalte abrufen zu können.

Derartige Streaming-Technologien für Multimedia-Inhalte sind z.B. aus der WO 97/31445 und der WO 99/10836 bekannt.

Eine Alternative zu den herkömmlichen Plug-In-basierten Verfahren sind plattformunabhängige Streaming-Verfahren, die auf der Java-Technologie basieren. Ein solches Verfahren ist in der nicht vorveröffentlichten Patentanmeldung DE 100 41 310.2 beschrieben.

Zur Generierung der Multimedia-Inhalte, die von einem Anwender auf seinem Rechner - erster Rechner- hergestellt werden soll, wird eine spezielle Software benötigt, mit deren Hilfe der Anwender seine Multimedia-Inhalte aus einzelnen Multimedia-Elementen zusammenstellen und diese dann in das entsprechende Streaming-Format konvertieren kann. Diese dann im Streaming-Format vorliegenden Multimedia-Inhalte können anschließend von einem Nutzer über seinen Rechner mit Hilfe des Streaming-Verfahrens auf seinem Rechner beispielsweise bei Hinterlegung auf einem Server von diesem abgerufen und dargestellt werden.

Die Software zur Generierung der Multimedia-Inhalte aus einzelnen Multimedia-Elementen ist jedoch als Desktop-Lösung realisiert und muss von dem Anwender auf seinem Rechner zuvor installiert werden. Die Bedienungs- und Funktionsvielfalt dieser Software setzt jedoch eine bestimmte Erfahrung des Nutzers mit Multimedia-Inhalten voraus oder erfordert zumindest eine zeitintensive Einarbeitung in die Software. Diese Software nennt man Encoder-Software (Autorensystem).

Für die Generierung von kleineren Graphiken z.B. Werbebannern werden auch vereinzelt Web-Dienste angeboten, die die Anpassung vorgefertigter Graphiken an die eigenen Bedürfnisse ermöglichen, siehe http://www.banner.de. Hier wird jedoch nur eine Art von Multimedia-Elementen, nämlich feststehende Bilder und Texte, im gängigen Format für Graphiken und Bilder erzeugt. Hierdurch ist es nicht möglich unterschiedliche Multimedia-Inhalte miteinander zu kombinieren und in ein Datenformat für das Streaming-Verfahren zu konvertieren, beispielsweise mehrere feste Bilder in einer zeitlichen Folge hintereinander, die mit akustischen Inhalten verbunden werden - Slideshow.

Aus der US 2001/0004417 A1 ist ein Verfahren bekannt, bei dem Video-Streams über ein Netzwerk hinweg nicht linear editiert und übertragen werden können. Hierfür ist ein Audio/Video-(AV)-Editiersystem vorgesehen, das einen Editierserver und eine Vielzahl von Clientrechnern aufweist. Der Editierserver und die Clientrechner sind über ein Netzwerk miteinander verbunden. Der Video-Stream wird entsprechend einer Editierinformation eines Clientrechners vom Editierserver zusammengestellt und dann dekodiert. Der nicht linear arbeitende Editierserver überträgt dann den dekodierten Video-Stream zu dem ebenfalls nicht linear arbeitenden Clientrechner. Dort wird der Video-Stream dekodiert und kann präsentiert werden.

Die Editierinformationen des Clientrechners betreffen verschiedene Videosequenzen und die Art, wie diese mit Videoeffekten verbunden werden sollen. Es handelt sich dabei immer nur um ein Multimedia-Element, nämlich Video, das jedoch verschiedene Inhalte aufweist, beispielsweise unterschiedliche Reihenfolgen von verschiedenen Videosequenzen. Mithilfe der Editierinformationen wird die Reihenfolge von verschiedenen Videosequenzen zusammengestellt.

Aus der WO 98/48363 ist ein Verfahren zur webbasierten Zusammenstellung von Audio- bzw. Video-Speichermedien bekannt. Nachteilig ist hierbei, dass lediglich bereits vorhandene Audio-Videokonserven zu einem Sampler zusammengestellt wurden können. Die Erstellung neuer multimedialer Inhalte ist mit dem beschriebenen Verfahren nicht möglich.

Der Erfindung liegt die Aufgabe zugrunde, ein Verfahren zum Erzeugen von Multimedia-Inhalten aus mehreren Multimedia-Elementen anzugeben, das unter Vermeidung der genannten Nachteile einem Anwender in die Lage versetzt, von seinem Rechner aus eigene Multimedia-Inhalte, wie Slideshow-Darstellungen, zu generieren, die in einem geeigneten Streaming-Format abgespeichert und später unter zur Hilfenahme eines Multimedia-Players wiedergegeben werden können.

Diese Aufgabe wird für das Verfahren durch die kennzeichnenden Merkmale des Anspruches 1 in Verbindung mit seinen Oberbegriffsmerkmalen und für die Anordnung durch den Anspruch 12 gelöst.

Der Erfindung liegt die Erkenntnis zugrunde, im Wesentlichen sämtliche für das Erzeugen von Multimedia-Inhalten aus mehreren Multimedia-Elementen notwendigen Software-Tools auf einem zweiten Rechner vorzusehen, der über ein Kommunikationsnetz mit dem ersten Rechner des Anwenders verbunden wird, sodass im Zusammenwirken mit einem Hilfsprogramm der Anwender einfach durch die einzelnen Schritte zur Generierung der Multimedia-Inhalte geführt wird, ohne jedoch eine entsprechende Software auf seinen Rechner laden zu müssen.

Nach der Erfindung wird daher zumindest ein zweiter Rechner mit dem Kommunikationsnetz verbunden, mit welchem der erste Rechner zunächst eine Kommunikationsverbindung herstellt, der zweite Rechner stellt Hilfsdaten für das Erzeugen von Multimedia-Inhalten mit dem ersten Rechner online bereit, mit denen der Anwender rechnergestützt bei der Zusammenstellung seiner Multimedia-Inhalte unterstützt wird. Der Anwender stellt dann die Daten für seine von ihm gewünschten Multimedia-Inhalte aus einzelnen Multimedia-Elementen zusammen. Anschließend werden diese Daten für das Streaming-Verfahren konvertiert. Hierdurch wird eine einfach und komfortable Zusammenstellung von verschiedenen Multimedia-Elementen zu Multimedia-Inhalten in einem Streaming-Format gewährleistet, wodurch auch unerfahrene Anwender ohne weiteres Multimedia-Inhalte auf ihrem Rechner generieren können.

Bei dem Verfahren basiert die Kommunikation zwischen dem ersten Rechner und dem zweiten Rechner über das Kommunikationsnetz auf einem Internet-Protokoll. Dabei ist auf dem ersten Rechner ein Web-Browser vorgesehen, mittels dem die Daten, wie die Hilfsdaten für das Erzeugen von Multimedia-Inhalten und/oder Daten der Multimedia-Elemente online von dem zweiten Rechner dem Anwender zur Verfügung gestellt werden.

Die Daten von Multimedia-Elementen können von einem Datenträger des ersten Rechners zugeführt werden. Gemäß einer Ausführungsform der Erfindung stellt jedoch der zweite Rechner dem ersten Rechner Daten von Multimedia-Elementen aus zumindest einem Multimedia-Archiv bereit. Hierdurch wird der Anwender in die Lage versetzt, sämtliche Daten von Multimedia-Elementen, die er für seine Multimedia-Inhalte benötigt, von dem zweiten Rechner zu beziehen, ohne eigene vorhalten zu müssen. Insofern ist ein Multimedia-Archiv in einem Datenträger des zweiten Rechners vorgesehen, aus dem die Daten der Multimedia-Elemente ausgelesen werden. Dabei ist das Multimedia-Archiv thematisch und/oder der Art der Multimedia-Elemente nach geordnet.

Der Anwender kann die Multimedia-Elemente miteinander kombinieren und hierfür natürlich auch seine eigenen Multimedia-Inhalte verwenden. Das Multimedia-Archiv besteht beispielsweise aus vorgefertigten Graphiken, wie Fotos und Clip-Arts, sowie aus kurzen Audio- und/oder Video-Clips, die dem Anwender thematisch geordnet zur Verfügung gestellt werden. Zudem können Texte eingebracht werden.

Zur Einbettung von Audiosignalen in Form von Sprachdaten in den Multimediainhalt werden Texte mittels einer Sprachsynthesesoftware zur Sprache synthetisiert, wobei die Sprachsynthesesoftware von dem zweiten Rechner aus online über den ersten Rechner dem Anwender zur Verfügung gestellt wird. Hierdurch erübrigen sich aufwendige Tonstudioaufnahmen zum Erzeugen von Audiosignalen in Form von Sprachdaten.

Insbesondere sind die einzelnen Multimedia-Daten beliebig miteinander kombinierbar, wodurch sich vielfältige Gestaltungsmöglichkeiten ergeben.

Der zweite Rechner arbeitet als Server und der erste Rechner als Client, wodurch das Verfahren einfach in einem Computer-/Kommunikations-Netzwerk realisiert werden kann.

Um zu vermeiden, dass keine umfangreichen Datenpakete, beispielsweise von Graphikdaten, übertragen werden müssen, werden die Datenpakete der ausgewählten und zusammengestellten Multimedia-Elemente - Graphiken, Audio-Clips, Video-Clips usw. - aus dem Multimedia-Archiv nur durch Angabe eines eindeutigen Indexes sowie der Positions- und Größenangaben referenziert. Analog dazu werden die Textinhalte ebenfalls nur als einfache Zeichenkette zuzüglich der Positions- und Größenangaben sowie der Stilattribute an den zweiten Rechner übertragen. Es werden somit nur die Referenzdaten der jeweiligen Daten der Multimedia-Elemente zwischen dem ersten Rechner und dem zweiten Rechner übertragen, wodurch aufwendige Übertragungsvolumen während der Generierung der Multimedia-Inhalte entfallen.

Vorzugsweise werden bei der Zusammenstellung der Multimedia-Elemente einzelne aufeinander aufbauende logische Abschnitte der Zusammenstellung der Multimedia-Elemente in Form von dynamischen HTML-Seiten erzeugt. Zur Kommunikation sowie zur Übermittlung der Daten zwischen dem ersten Rechner und dem zweiten Rechner wird dabei vor allem die Java-Technologie, insbesondere Java-Applets und Java-Servlets, verwendet. Alternativ dazu kann auch eine andere Technologie zur Generierung dynamischer HTML-Seiten verwendet werden.

Die Daten der Multimedia-Inhalte werden auf dem zweiten Rechner für jede Session, also einer Sitzung eines Anwenders, separat in einem sogenannten Session-Objekt gespeichert. Dadurch ist jederzeit ein Wechsel zwischen den einzelnen Bedienschritten möglich und zwar sowohl vorwärts als auch rückwärts. Die HTML-Seiten der einzelnen Bedienschritte werden jeweils in Abhängigkeit der verfügbaren Multimedia-Daten dynamisch erzeugt. Jeweils beim Wechsel von einem Bedienschritt zum nächsten, werden die eingegebenen Daten daher an das zugehörige Servlet des nächsten Bedienschrittes gesendet, das diese dann in dem Session-Objekt abspeichert. Auch beim Wechsel zurück zum letzten Bedienschritt werden die eingegebenen Daten gespeichert, sodass diese beim nächsten Aufruf dieses Bedienschrittes dem Anwender wieder zur Verfügung stehen.

Gemäß einer Ausführungsform der Erfindung werden nach Zusammenstellung der Multimedia-Inhalte in einer Vorschau-Funktion die Daten komprimiert und aus den im Session-Objekt abgespeicherten Daten ein Multimedia-Stream im zweiten Rechner für den ersten Rechner zur Kontrolle des Ergebnisses der Zusammenstellung der einzelnen Multimedia-Elemente für den Anwender erzeugt. Hierdurch kann der Anwender seine zusammengestellten Multimedia-Inhalte in einem Multimedia-Stream betrachten und anschließend gegebenenfalls wieder Änderungen vornehmen.

Vorzugsweise werden die Daten in ein plattformunabhängiges Streaming-Format konvertiert, sodass möglichst viele Nutzer die Multimedia-Inhalte des Anwenders beziehen können.

Die Multimedia-Inhalte im Streaming-Format werden dann durch den ersten Rechner gesteuert von dem zweiten Rechner in eine Anwendung, wie Homepage, Datenbank oder ähnliches, beispielsweise eines dritten mit dem Kommunikationsnetz verbundenen Rechners integriert.

Weitere Vorteile, Merkmale und Anwendungsmöglichkeiten der vorliegenden Erfindung ergeben sich aus der nachfolgenden Beschreibung in Verbindung mit den in der Zeichnung dargestellten Ausführungsformen.

Die Erfindung wird im folgenden anhand von den in der Zeichnung dargestellten Ausführungsformen näher beschrieben. In der Beschreibung, in den Patentansprüchen, der Zusammenfassung und in der Zeichnung werden die in der hinten angeführten Liste der Bezugszeichen verwendeten Begriffe und zugeordneten Bezugszeichen verwendet.

In der Zeichnung bedeuten:
- Fig. 1: eine schematische Ansicht der Anordnung von Rechnern mit einem Kommunikationsnetz zur Durchführung des Verfahrens;
- Fig. 2: einen Ausschnitt der Bildschirmdarstellung zum Führen des Anwenders gemäß einem Verfahrensschritt;
- Fig. 3: einen Ausschnitt der Bildschirmdarstellung zum Führen des Anwenders gemäß einem weiteren Verfahrensschritt, und
- Fig. 4: einen Ausschnitt der Bildschirmdarstellung zum Führen des Anwenders gemäß einem weiteren Verfahrensschritt.

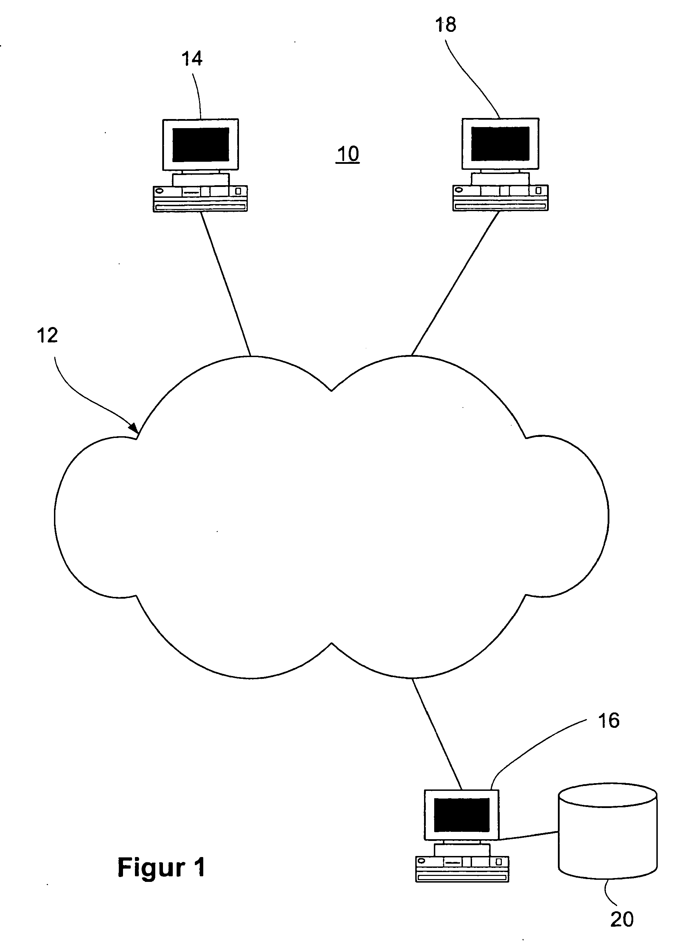

In Fig. 1 ist schematisch eine Anordnung 10 mit einem Telekommunikationsnetz 12, nämlich Internet, dargestellt, an dem eine Vielzahl von Rechnern angeschlossen sind. Zur Darstellung des Verfahrens sind lediglich drei Rechner 14, 16 und 18 dargestellt. Der zweite Rechner 16 arbeitet als Server und der erste Rechner 14 als Client. Über den dritten Rechner 18 werden Homepages dem Telekommunikationsnetz 12 zur Verfügung gestellt. Die Kommunikation der Rechner 14, 16 und 18 basiert auf dem Internet-Protokoll.

Der zweite Rechner 16, also der Server, weist ein Multimedia-Archiv 20 auf, in dem verschiedenste Multimedia-Elemente der Art nach sowie thematisch geordnet sind. Multimedia-Elemente können dabei Einzelbilder/Graphiken, Texte, URLs/Links, Bewegtbilder und/oder Audiosignale sein, wobei die Bewegtbilder als Video-Clips und die Audiosignale als Audio-Clips vorliegen.

Mit Hilfe der Anordnung 10 können nun Multimedia-Inhalte aus mehreren Multimedia-Elementen, wie Einzelbilder/Graphiken, Texte, URLs/Links, Bewegtbilder und/oder Audiosignale u. ä. in einem Datenformat für das Streaming-Verfahren mit Hilfe des ersten Rechners 14 erzeugt werden.

Hierfür weist der erste Rechner 14 einen Web-Browser auf, mit dessen Hilfe eine Verbindung vom ersten Rechner 14 über das Telekommunikationsnetz 12 zu dem zweiten Rechner 16 hergestellt wird. Hieraufhin stellt der zweite Rechner 16 dem ersten Rechner 14 Hilfsdaten zur Verfügung, die es dem Anwender ermöglichen, mittels der Hilfsdaten durch die Anwendung des Verfahrens zur Erzeugung von Multimedia-Inhalten geführt zu werden. Der zweite Rechner 16 stellt somit Hilfsdaten für das Erzeugen von Multimedia-Inhalten dem ersten Rechner 14 online zur Verfügung, mit denen der Anwender, rechnergestützt bei der Zusammenstellung seiner Multimedia-Inhalte unterstützt wird.

Danach stellt der Anwender die Daten für seine von ihm gewünschten Multimedia-Inhalte aus einzelnen Multimedia-Elementen zusammen, wobei er die Daten der Multimedia-Inhalte entweder offline seinem ersten Rechner 14 von einem Datenträger zur Verfügung stellt oder eben, wie erwähnt, online von dem Multimedia-Archiv 20 über den zweiten Rechner 16 dem ersten Rechner 14 die Multimedia-Daten zur Verfügung gestellt werden, indem aus dem Multimedia-Archiv 20 die Daten der Multimedia-Elemente ausgelesen und an den ersten Rechner 14 übermittelt werden.

Nach der Zusammenstellung seiner Multimedia-Inhalte werden die Daten für das Streaming-Verfahren konvertiert.

Die Kommunikation zwischen dem zweiten Rechner 16 und dem ersten Rechner 14 basiert dabei auf der Java-Technologie unter Verwendung von Java-Applets und Java-Servlets.

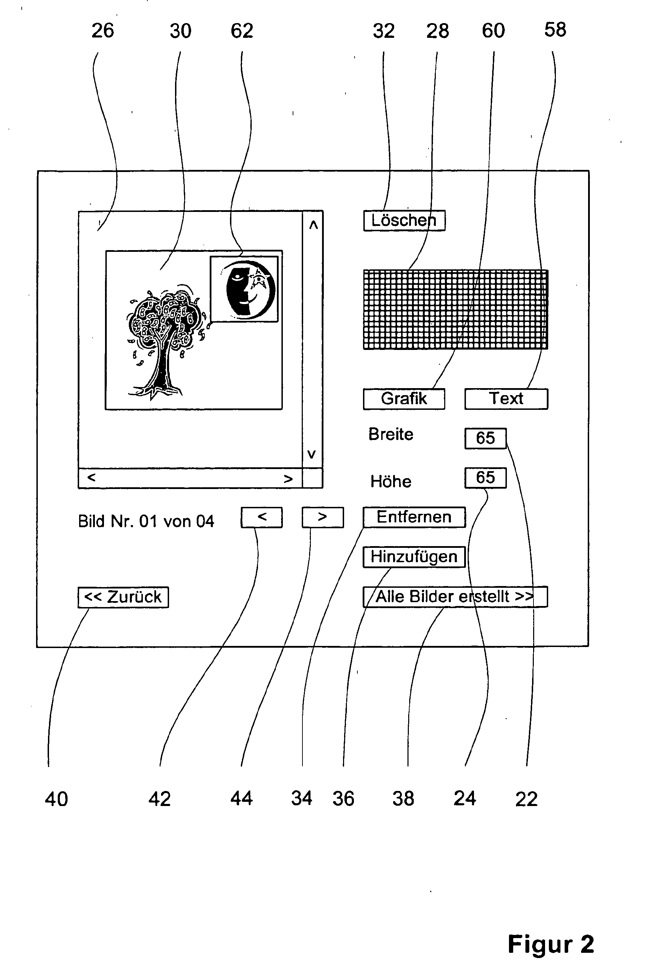

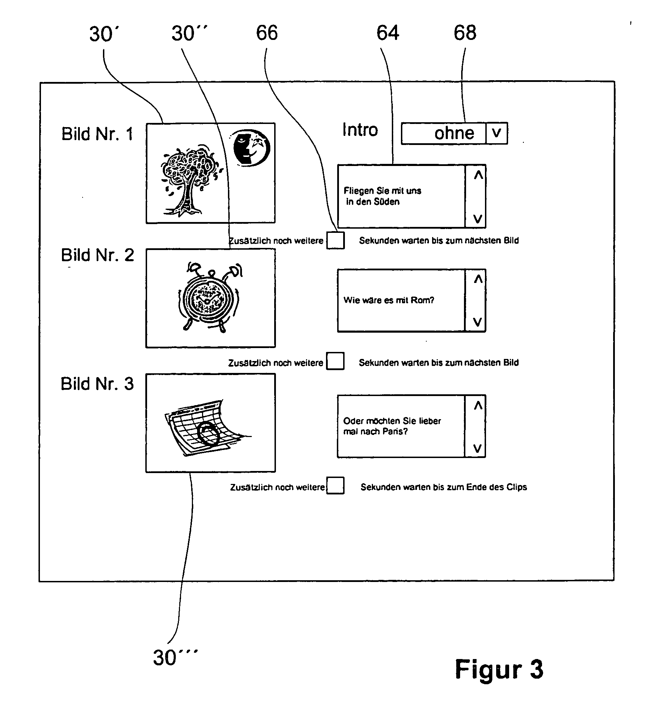

Anhand der Figuren 2 bis 4 wird im folgenden die Generierung eines Multimedia-Inhalts, nämlich einer Slideshow veranschaulicht.

Für die Online-Generierung ist eine solche Slideshow besonders geeignet, da hierbei akustische Inhalte mit einer unterlegten, zeitlich synchronisierten Bildersequenz erzeugt werden, wodurch das Streaming-Verfahren ausgenutzt wird.

Die Generierung der Slideshow gliedert sich in mehrere Schritte, durch die der Anwender, der über seinen ersten Rechner 14 seine Slideshow generieren will, durch die Hilfsdaten, die er von dem zweiten Rechner 16 online über den ersten Rechner 14 zur Verfügung gestellt wird, nacheinander geführt wird.

Dabei erscheint auf dem Bildschirm des ersten Rechners 14 eine Maske. Über Breite und Höhe kann ein durch einen Positionsrahmen 62 markiertes Grafikelement vergrößert oder verkleinert werden. Die Vergrößerung/Verkleinerung erfolgt in zwei Schritten zunächst muss in ein erstes Feld 22 eine entsprechende Prozentzahl eingegeben werden, um die Breite entsprechend zu ändern. Dann muss eine Prozentzahl in das zweite Feld 24 eingegeben werden, womit jedoch die Höhe des Bildes 30 entsprechend geändert werden kann.

Das zu bearbeitende Bild 30 erscheint in einem dritten Feld 26. Über ein Anzeigenfeld 28 kann der Anwender die entsprechenden Hintergrundfarben des in dem Feld 26 dargestellten Bildes 30 auswählen.

Über ein viertes Feld 32 kann die Zusammenstellung der verschiedenen Bilder wieder gelöscht werden, sodass von neuem begonnen werden kann. Einzelne Bilder können über das Feld 34 entfernt und über das Feld 36 hinzugefügt werden. Um den Vorgang des Erstellens der einzelnen Bildfolgen abzuschließen, ist das Feld 38 vorgesehen, mit dessen Betätigung zum nächsten Schritt übergegangen wird.

Über ein achtes Feld 40 kann auf einen der vorherigen Schritte der Zusammenstellung zurückgegangen werden.

Die bereits erstellten Bilder können über die Felder 42 und 44 vor bzw. zurück geblättert werden.

Die Aktivierung der Felder 22 bis 44 ist durch direkte Interaktion mittels der Maus möglich. Hierdurch kann das Bild 30 auch direkt graphisch positioniert und skaliert werden. Das Java-Applet stellt dabei die Arbeitsfläche des Bildes 30 in der gewünschten Größe der Slideshow dar, die die Bearbeitung der eigentlichen Slideshow-Bilder ermöglicht.

Folgende Funktionen stehen dem Anwender nun zur Verfügung:

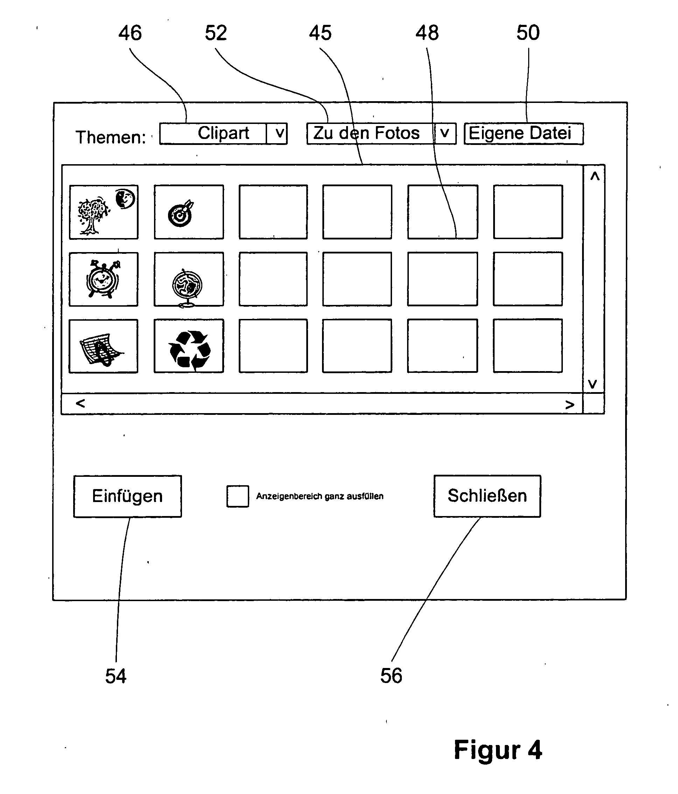

Zum einen kann er ein Graphik-Archiv 45 nutzen, wie es in Fig. 4 dargestellt ist, das Teil des Multimedia-Archivs 20 ist. Es werden thematisch geordnet die verfügbaren Fotos und Clip-Arts übersichtsartig als kleine Vorschaubilder angezeigt, die dann per Maus-Klick in das Feld 26 übernommen werden können. Eine Auswahlliste 46 gibt dabei die verfügbaren Themenbereiche vor, nach der das Graphik-Archiv 45 geordnet ist.

Sobald der Anwender in der Auswahlliste 46 ein anderes Themenfeld auswählt, wird die Bildvorschau 48 mit den neuen Graphiken aktualisiert. Um eine schnelle Darstellung dieser Bildvorschau 48 zu gewährleisten, wird diese in Form einer einzigen Graphik vom zweiten Rechner 16 aus dem Multimedia-Archiv 20 zum Applet übertragen. Dadurch wird für die Darstellung der gesamten Bildvorschau 48 nur eine einzige Anfrage an den zweiten Rechner 16 benötigt. Unabhängig von den

Inhalten des Graphik-Archivs können auch eigene Graphiken über das Feld 50 vom Anwender über den ersten Rechner 14 auf den zweiten Rechner 16 geladen und in die Slideshow eingebunden werden.

Über das Feld 52 kann zu den Fotos gewechselt werden, die ebenfalls thematisch in einem hier nicht dargestellten Foto-Archiv geordnet sind, das entsprechend dem Graphik-Archiv 45 aufgebaut ist.

Das Auswählen eines Bildes aus der Bildvorschau 48 und das Einfügen in das Feld 26 gemäß Fig. 2 erfolgt entweder per Maus-Doppelklick oder durch Maus-Klick auf das Bild und anschließenden Betätigen - Maus-Klick - eines Feldes 54, wodurch das ausgewählte Bild eingefügt wird. Über ein Feld 56 wird das Graphik-Archiv 45 wieder verlassen.

Neben dem Einbinden von vorgefertigten Graphiken und Fotos kann der Anwender auch Texte in seine Slideshow einbinden. Die Stilattribute, beispielsweise Farbe, Form, usw., können dabei frei gewählt werden. Gemäß Fig. 2 gelangt der Anwender über das Feld 58 zu einem Textfenster, wo er den Textinhalt erstellen kann und in das Bild 30 einfügen kann.

Zum Graphik-Archiv 45 gelangt der Anwender über ein Feld 60 gemäß Fig. 2.

Alle graphischen Multimedia-Elemente, das heißt Graphiken einschließlich der Fotos und Texte können mit Hilfe der Maus selektiert und in der Größe beliebig skaliert sowie in der Position verschoben werden.

Selektierte Elemente werden durch einen farblich hervorgehobenen Positionsrahmen 62 angezeigt. Der Maus-Cursor ändert seine Darstellung jeweils in Abhängigkeit der aktiven Funktion, z. B. Maus am Rand des Positionsrahmens: Skalierung; Maus innerhalb des Positionsrahmens: Positionierung. Die Multimedia-Elemente können beliebig miteinander kombiniert werden.

Die Hintergrundfarbe des Bildes 30 kann durch Anklicken der Anzeigefläche 28 mit den möglichen Hintergrundfarben separat festgelegt werden.

Der Nutzer kann zwischen den einzelnen Slideshow-Bildern wechseln und diese separat bearbeiten, indem er mit der Maus entweder das Feld 42 oder das Feld 44 betätigt, wobei das aktuelle Bild neben dem Feld 42 angezeigt wird, ebenso die insgesamt erstellten Bilder.

Über die Felder 34 und 36 können die Slideshow-Bilder nachträglich hinzugefügt oder entfernt werden.

Nachdem der Anwender alle Bilder 30 der Slideshow-Sequenz erstellt hat, wechselt er durch Maus-Klick zu dem Eingabefenster für die akustischen Inhalte, indem er das Feld 38 anklickt. Nun erscheint die zuvor durch zusammengestellte Bilder entstandene dynamische Web-Seite, die die einzelnen Slideshow-Bilder 30 in verkleinerter Form untereinander darstellt.

Neben jedem Bild 30 der Slideshow befindet sich ein Texteingabefeld 64, in das der Anwender seine gewünschten Inhalte in Textform eingeben kann. Diese Textinhalte werden dann später durch die im zweiten Rechner 16 integrierte Sprachsynthese-Software in akustische Sprache umgewandelt. Die zeitliche Abfolge der Bilder 30 erfolgt dann später im Multimedia-Stream derart, dass nacheinander die akustischen Inhalte wiedergegeben werden, wobei jeweils synchron die zugehörigen Bilder 30 angezeigt werden. Der Anwender hat außerdem die Möglichkeit eine Pausenzeit in den Feldern 66 festzulegen, die zusätzlich vor dem Beginn des nächsten Bildes 30 eingefügt werden soll, sodass auch Bilder 30 ohne eine akustische Beschreibung für eine festgelegte Zeitspanne wiedergegeben werden können.

Alternativ dazu besteht für den Anwender die Möglichkeit statt der Nutzung der Sprachsynthese, eine eigene Audio-Datei auf den zweiten Rechner 16 zu laden, und diese als Audio-Inhalt für den Multimedia-Stream zu verwenden.

Als weitere Option kann der Anwender aus einer vorgegebenen Auswahlliste 68 ein akustisches Intro auswählen, also einen Audio-Clip, der zu Anfang des ersten Bildes 30 der Slideshow eingefügt wird. Dieser Bedienschritt kann als HTML-Formular realisiert werden.

In einem nächsten Bedienschritt kann der Anwender aus einer vorgegebenen Auswahlliste eine Hintergrundmusik auswählen, die den vorher generierten akustischen Inhalten überlagert wird.

Ein weiteres, hier nicht dargestelltes Texteingabefeld, ermöglicht die Angabe eines Links - URL -, der später bei der Wiedergabe automatisch vom Browser eines Nutzers geöffnet wird, sobald der Nutzer auf den Bildanzeigebereich des Players klickt, z. B. um auf weitergehende Informationen im Netz zu verweisen. Dieser Bedienschritt ist ebenfalls als HTML-Formular realisiert.

Nach Fertigstellung der Multimedia-Inhalte kann der Anwender sich diese in einer Vorschaufunktion ansehen. Damit dem Anwender die Möglichkeit eröffnet werden kann, bis zu diesem Zeitpunkt völlig unverbindlich diesen Online-Dienst auszuprobieren, wird in den Multimedia-Stream der Vorschau ein Copyright-Hinweis eingefügt, der die unerwünschte Verwendung dieses Multimedia-Streams verhindert, sollte der Anwender versuchen, den Vorschau-Clip abzuspeichern.

Wenn der Anwender über die Vorschau-Phase hinaus den erstellten Multimedia-Stream verwenden will, kann er diesen per Maus-Klick freischalten lassen. Je nach Art des Dienstes kann im Weiteren dann beispielsweise ein benutzerabhängiges Log-In erfolgen, das den automatischen Upload und die Integration auf die gewünschte Web-Seite des dritten Rechners 18 ermöglicht. Dieser Bedienschritt ist als HTML-Formular realisiert.

Die oben beschriebene Technologie ist nicht nur auf die Generierung von Slideshow-Inhalten beschränkt. Ebenfalls geeignet sind reine Audio- und/oder Video-Inhalte. Analog zu dem beschriebenen Verfahren der Slideshow-Generierung können Multimedia-Streams, die ausschließlich aus Audio-Inhalten bestehen, ebenfalls mit Hilfe der automatischen Sprachsynthese sowie mit Hilfe vorgefertigter Audio-Clips, beispielsweise für die Hintergrundmusik, erzeugt werden.

Video-Inhalte lassen sich ebenfalls als vorgefertigte Clips in selbst zu erstellende Multimedia-Streams integrieren bzw. eigene Video-Clips können selbst auf den zweiten Rechner 16 geladen und zu den Multimedia-Inhalten hinzugefügt werden. Vorgefertigte Video-Clips aus dem Multimedia-Archiv 20 können z. B. auch als Intro für die oben beschriebenen Slideshow-Inhalte verwendet werden.

Die für die einzelnen Bedienschritte dynamisch zu erzeugenden HTML-Seiten lassen sich auf einfache Art mit Hilfe der Java-Servlet-Technologie realisieren. Alternativ dazu kann auch eine andere Technologie zur Generierung dynamischer Web-Seiten verwendet werden.

Die die Multimedia-Inhalte beschreibenden Datensätze werden auf den zweiten Rechner 16 für jede Session - Sitzung eines Nutzers - separat in einem sogenannten Session-Objekt gespeichert. Dadurch ist jeder Zeit ein Wechsel zwischen den einzelnen Bedienschritten möglich, sowohl vorwärts als auch rückwärts. Die HTML-Seiten der einzelnen Bedienschritte werden jeweils in Abhängigkeit der verfügbaren Multimedia-Daten dynamisch erzeugt.

Jeweils beim Wechsel von einem Bedienschritt zum nächsten werden die eingegebenen Daten daher an das zugehörige Servlet des nächsten Bedienschrittes gesendet, das diese dann in dem Session-Objekt abspeichert. Auch beim Wechsel zurück zum letzten Bedienschritt werden die eingegebenen Daten gespeichert, sodass diese beim nächsten Aufruf dieses Bedienschrittes dem Anwender wieder zur Verfügung stehen.

Erst beim Aufruf der Vorschaufunktion beginnt der eigentliche Komprimierungsprozess und der zweite Rechner 16 erzeugt aus den im Session-Objekt abgespeicherten Daten den entsprechenden Multimedia-Stream.

Die bei der Erstellung verwendeten Graphiken, Fotos und Audio-Clips aus dem Multimedia-Archivs 20 werden im Session-Objekt nur durch die Angabe eines eindeutigen Indexes sowie der Positions- und Größenangaben referenziert. Dadurch müssen an den zweiten Rechner 16 von dem ersten Rechner 14 keine umfangreichen Graphikdaten übertragen werden. Analog dazu werden die Textinhalte ebenfalls nur als einfache Zeichenkette zuzüglich der Positions- und Größenangaben sowie der Stilattribute an den zweiten Rechner 16 übertragen und dort in dem genannten Session-Objekt abgespeichert.

Als Format für den Multimedia-Stream wird ein plattformunabhängiges Streaming-Verfahren auf Java-Basis verwendet, da hierbei für die Abrufer der erstellten Multimedia-Inhalte keine speziellen Multimedia-Player vorausgesetzt werden und somit ein größtmöglicher Nutzerkreis angesprochen wird.

### BEZUGSZEICHENLISTE

- 10: Anordnung
- 12: Telekommunikationsnetz, Internet
- 14: erster Rechner, Client
- 16: zweiter Rechner, Server
- 18: dritter Rechner, Homepage
- 20: Multimedia-Archiv
- 22: erstes Feld - Breite in %
- 24: zweites Feld - Höhe in %
- 26: drittes Feld - maximale Erstreckung des Bildes
- 28: Anzeigefläche mit möglichen Hintergrundfarben
- 30: erstelltes/ausgesuchtes Bild
- 32: viertes Feld - Löschen
- 34: fünftes Feld - >
- 36: sechstes Feld - Hinzufügen
- 38: siebtes Feld - alle Bilder erstellt >>
- 40: achtes Feld - << zurück
- 42: neuntes Feld - <
- 44: zehntes Feld - >
- 45: Graphik-Archiv
- 46: Auswahlleiste
- 48: Bildvorschau
- 50: Feld
- 52: Feld
- 54: Feld - Einfügen
- 56: Feld - Schließen
- 58: Feld - Text
- 60: Feld - Graphik
- 62: Positionsrahmen
- 64: Texteingabefeld
- 66: Pausenfeld
- 68: Auswahlleiste

## Patentansprüche

1. Verfahren zum Erzeugen von Multimedia-Inhalten aus mehreren Multimedia-Elementen, wie Einzelbilder/Grafiken, Texte, URLs/Links, Bewegtbilder und/oder Audiosignale u.ä., in einem Datenformat für ein Streaming-Verfahren mit einem ersten Rechner (14), der mit einem Kommunikationsnetz (12), wie Internet oder Intranet, verbunden ist und mit dem die Multimedia-Inhalte aus den einzelnen Multimedia-Elementen zusammengestellt werden,
wobei zumindest ein zweiter Rechner (16) mit dem Kommunikationsnetz (12) verbunden wird, mit welchem der erste Rechner (14) zunächst eine Kommunikationsverbindung herstellt,
wobei der zweite Rechner (16) Daten von Multimedia-Elementen und Software-Tools für das Erzeugen von Multimedia-Inhalten dem ersten Rechner (14) online bereitstellt, mit denen der Anwender, rechnergestützt bei der Zusammenstellung seiner Multimedia-Inhalte aus den Daten von Multimedia-Elementen, unterstützt wird,
wobei die einzelnen Daten von Multimedia-Elementen beliebig miteinander kombinierbar sind, und der Anwender aus den einzelnen Daten von Multimedia-Elementen seine von ihm gewünschten Multimedia-Inhalte zusammenstellen kann
wobei die zusammengestellten Multimedia-Inhalte von dem zweiten Rechner in das Datenformat für das Streaming-Verfahren konvertiert werden,
wobei der zweite Rechner (16) als Server und der erste Rechner (14) als Client arbeitet und die Kommunikation zwischen dem ersten Rechner (14) und dem zweiten Rechner (16) über das Kommunikationsnetz auf einem Internet-Protokoll basiert und auf dem ersten Rechner (14) ein Web-Browser vorgesehen ist, mittels dem die Software-Tools zur Zusammenstellung der Multimedia-Elemente und die Daten der Multimedia-Elemente online von dem zweiten Rechner (16) dem Anwender zur Verfügung gestellt werden,
wobei zur Einbettung von Audiosignalen in Form von Sprachdaten in den Multimedia-Inhalt Texte mittels einer Sprachsynthese-Software zu Sprache synthetisiert werden, wobei die Sprachsynthesesoftware in dem zweiten Rechner (16) integriert ist und von dem zweiten Rechner (16) aus online über den ersten Rechner (14) dem Anwender zur Verfügung gestellt wird, wobei die Texte als Zeichenkette an den zweiten Rechner (16) übertragen werden,
wobei die ausgewählten Multimedia-Elemente und die daraus zusammengestellten Multimedia-Inhalte über Indices, Positions-, Größenangaben und Stilattribute referenziert werden und lediglich diese Referenzdaten zwischen dem ersten Rechner (14) und dem zweiten Rechner (16) übertragen werden.

2. Verfahren nach Anspruch 1, **dadurch gekennzeichnet, dass** die Daten von Multimedia-Elementen auf dem zweiten Rechner in einem Multimedia-Archiv (20) bereitgestellt werden.

3. Verfahren nach Anspruch 2, **dadurch gekennzeichnet, dass** das Multimedia-Archiv (20) in einem Datenträger des zweiten Rechners (16) vorgesehen ist, aus dem die Daten der Multimedia-Elemente ausgelesen werden.

4. Verfahren nach Anspruch 2 oder 3, **dadurch gekennzeichnet, dass** das Multimedia-Archiv (20) thematisch und/oder der Art der Multimedia-Elemente nach geordnet ist.

5. Verfahren nach einem der vorangehenden Ansprüche, **dadurch gekennzeichnet, dass** bei der Zusammenstellung der Multimedia-Elemente einzelne aufeinander aufbauende logische Abschnitte der Zusammenstellung der Multimedia-Elemente auf dynamischen HTML-Seiten erzeugt werden.

6. Verfahren nach einem der vorangehenden Ansprüche, **dadurch gekennzeichnet, dass** zur Kommunikation sowie zur Übermittlung der Daten zwischen dem ersten Rechner (14) und dem zweiten Rechner (16) die Java-Technologie, insbesondere Java-Applets und Java-Servlets, verwendet wird.

7. Verfahren nach einem der vorangehenden Ansprüche, **dadurch gekennzeichnet, dass** für jede Session - Sitzung eines Anwenders zur Erzeugung der Multimedia-Inhalte - die Schritte der Zusammenstellung der Daten der Multimedia-Elemente durch den Anwender in Session-Objekten so gespeichert werden, dass ein Wechsel zwischen den einzelnen Schritten der Zusammenstellung sowohl vorwärts als auch rückwärts möglich ist.

8. Verfahren nach einem der vorangehenden Ansprüche, **dadurch gekennzeichnet, dass** nach Zusammenstellung der Multimedia-Inhalte in einer Vorschau-Funktion die Daten komprimiert werden und aus den im Session-Objekt abgespeicherten Daten ein Multimedia-Stream im zweiten Rechner (16) für den ersten Rechner (14) zur Kontrolle des Ergebnisses der Zusammenstellung der einzelnen Multimedia-Elemente für den Anwender erzeugt wird.

9. Verfahren nach einem der vorangehenden Ansprüche, **dadurch gekennzeichnet, dass** die Daten in ein plattformunabhängiges Streaming-Format konvertiert werden.

10. Verfahren nach einem der vorangehenden Ansprüche, **dadurch gekennzeichnet, dass** die Multimedia-Inhalte im Streaming-Format durch den ersten Rechner (14) gesteuert von dem zweiten Rechner (16) in eine Anwendung, wie Homepage, Datenbank oder ähnliches, beispielsweise eines dritten mit dem Kommunikationsnetz verbundenen Rechners (18) integriert werden.

11. Verfahren nach einem der vorangehenden Ansprüche, **dadurch gekennzeichnet, dass** der Anwender mittels der Software-Tools durch die Anwendung des Verfahrens zur Erzeugung von Multimedia-Inhalten geführt wird.

12. Anordnung die Mittel zum Durchführen des Verfahrens nach einem der vorangehenden Ansprüche enthält.

## Claims

1. Method for producing multimedia content from multiple multimedia elements such as single images/graphics, text, URLs/links, moving images and/or audio signals, and the like, in a data format for a streaming method, having a first computer (14) that is connected to a communications network (12) such as the Internet or an intranet, and with which the multimedia content is to be assembled from the individual multimedia elements,
wherein there is connected to the communications network (12) at least one second computer (16) with which the first computer (14) initially establishes a communications connection,
wherein the second computer (16) provides the first computer (12) online with data consisting of multimedia elements and software tools for producing multimedia content with which the user is supported in the computer-assisted assembly of said user's multimedia content from the data of multimedia elements,
wherein the individual data of multimedia elements can be combined with one another in any desired manner, and the user can assemble his desired multimedia content from the individual data of multimedia elements,
wherein the assembled multimedia content is converted by the second computer into the data format for the streaming method,
wherein the second computer (16) operates as a server and the first computer (14) operates as a client, and the communication between the first computer (14) and the second computer (16) through the communications network is based on an Internet protocol, and there is provided on the first computer (14) a Web browser by means of which the software tools for assembling the multimedia elements and the data of the multimedia elements are made available online by the second computer (16) to the user,
wherein, for embedding audio signals in the multimedia content in the form of speech data, texts are synthesized to speech by means of a speech-synthesis software, wherein the speech synthesis software is integrated into the second computer (16) and is made available online from the second computer (16) through the first computer (14) to the user, wherein the texts are transmitted to the second computer (16) as character strings,
wherein the selected multimedia elements and the multimedia content assembled therefrom are referenced by means of indices, position information, size information and style attributes, and only these reference data are transmitted between the first computer (14) and the second computer (16).

2. Method according to claim 1, **characterized in that** the data of multimedia elements are made available on the second computer in a multimedia archive (20).

3. Method according to claim 2, **characterized in that** the multimedia archive (20) is provided in a data medium of the second computer (16) from which the data of the multimedia elements are read.

4. Method according to any one claims 2 or 3, **characterized in that** the multimedia archive (20) is organized thematically and/or according to the types of the multimedia elements.

5. Method according to any one of the preceding claims, **characterized in that** in assembling the multimedia elements, individual logical sections of the assembly of multimedia elements, which build on one another, are produced on dynamic HTML pages.

6. Method according to any one of the preceding claims, **characterized in that** the Java technology, in particular Java applets and Java servlets, are used for communicating and for transmitting the data between the first computer (14) and the second computer (16).

7. Method according to any one of the preceding claims, **characterized in that** for each session - a sitting of a user for producing multimedia content - the steps of assembly by the user of the data of the multimedia elements are stored in session objects such that it is possible to switch between the individual steps of the assembly both forward and backward.

8. Method according to any one of the preceding claims, **characterized in that** in a preview function following assembly of the multimedia content, the data are compressed and a multimedia stream is produced in the second computer (16) for the first computer (14) from the data stored in the session object for review by the user of the result of the assembly of the individual multimedia elements.

9. Method according to any one of the preceding claims, **characterized in that** the data are converted into a platform-independent streaming format.

10. Method according to any one of the preceding claims, **characterized in that** the multimedia content in the streaming format is integrated by the second computer (16), under the control of the first computer (14), into an application such as a home page, database, or the like, for example of a third computer (18) connected to the communications network.

11. Method according to any one of the preceding claims, **characterized in that** the user is guided by the software tools through the use of the method for producing multimedia content.

12. Device that contains means for carrying out the method according to any one of the preceding claims.

## Revendications

1. Procédé de création de contenus multimédias rassemblant une pluralité d'éléments multimédias, tels qu'images individuelles/graphiques, textes, URL/liens, images animées et/ou signaux audio et similaires, dans un format de données destiné à un procédé de streaming, à l'aide d'un premier calculateur (14) relié à un réseau de communication (12), tel qu'internet ou intranet, et à l'aide duquel les contenus multimédias sont créés en rassemblant différents éléments multimédias,
un deuxième calculateur (16) au moins étant relié au réseau de communication (12) avec lequel le premier calculateur (14) établit, dans un premier temps, une liaison de communication,
le deuxième calculateur (16) fournissant en ligne au premier calculateur (14) des données d'éléments multimédias et des outils logiciels de création de contenus multimédias permettant d'assister par calculateur l'utilisateur lors de la création de ses contenus multimédias rassemblant les données d'éléments multimédias,
les différentes données d'éléments multimédias étant aptes à être combinées les unes avec les autres de manière quelconque et l'utilisateur pouvant créer les contenus multimédias souhaités en rassemblant les différentes données d'éléments multimédias,
les contenus multimédiass créés étant convertis, par le deuxième calculateur, dans le format de données destiné au procédé streaming,
le deuxième calculateur (16) fonctionnant comme serveur et le premier calculateur (14) fonctionnant comme client, et la communication entre le premier calculateur (14) et le deuxième calculateur (16) via le réseau de communication étant basé sur un protocole internet et le premier calculateur (14) comportant un navigateur web qui fournit en ligne à l'utilisateur les outils logiciels pour le rassemblement des éléments multimédias ainsi que les données des éléments multimédias du deuxième calculateur (16),
des textes étant synthétisés à l'aide d'un logiciel de synthèse vocale pour l'intégration de signaux audio sous la forme de données vocales dans le contenu multimédia, le logiciel de synthèse vocale étant intégré au deuxième calculateur (16) et étant fourni en ligne à l'utilisateur, par l'intermédiaire du premier calculateur (14), par le deuxième calculateur (16), les textes étant transmis au deuxième calculateur (16) sous forme d'une chaîne de caractères,
les éléments multimédias sélectionnés et les contenus multimédias rassemblés à partir de ceux-ci étant référencés en utilisant des indices, des informations de position et de taille et des attributs de style, et seules ces données de référence étant transmises entre le premier calculateur (14) et le deuxième calculateur (16).

2. Procédé selon la revendication 1, **caractérisé en ce que** les données d'éléments multimédias sont mises en place dans une archive multimédia (20) sur le deuxième calculateur.

3. Procédé selon la revendication 2, **caractérisé en ce que** l'archive multimédia (20) est prévue dans un support de données du deuxième calculateur (16) à partir duquel les données des éléments multimédias sont récupérées.

4. Procédé selon la revendication 2 ou 3, **caractérisé en ce que** l'archive multimédia (20) est classée par thème et/ou par nature des éléments multimédias.

5. Procédé selon l'une des revendications précédentes, **caractérisé en ce qu'**au cours du rassemblement des éléments multimédias, différentes sections logiques successives des éléments multimédias rassemblés sont créées sur des pages HTML dynamiques.

6. Procédé selon l'une des revendications précédentes, **caractérisé en ce qu'**on utilise la technologie Java, notamment des applets Java et des servlets Java pour la communication et pour la transmission des données entre le premier calculateur (14) et le deuxième calculateur (16).

7. Procédé selon l'une des revendications précédentes, **caractérisé en ce que** pour chaque session - session de création de contenus multimédias d'un utilisateur - les étapes du rassemblement des données des éléments multimédias par l'utilisateur sont enregistrées dans des objets de session de manière à permettre de passer d'une étape du rassemblement à l'autre aussi bien en avant qu'en arrière.

8. Procédé selon l'une des revendications précédentes, **caractérisé en ce que**, après le rassemblement des contenus multimédias, les données sont comprimées dans une fonction d'aperçu et dans le deuxième calculateur (16) est créé un stream multimédia à partir des données enregistrées dans l'objet de session, destiné au premier calculateur (14) pour le contrôle du résultat du rassemblement des différents éléments multimédias pour l'utilisateur.

9. Procédé selon l'une des revendications précédentes, **caractérisé en ce que** les données sont converties en un format streaming indépendant de la plate-forme.

10. Procédé selon l'une des revendications précédentes, **caractérisé en ce que** les contenus multimédias en format streaming sont intégrés par le deuxième calculateur (16), commandé par le premier calculateur (14), dans une application, telle que page d'accueil, base de données ou similaires, d'un troisième calculateur (18), par exemple, relié au réseau de communication.

11. Procédé selon l'une des revendications précédentes, **caractérisé en ce que** l'utilisateur est guidé, moyennant les outils logiciels, à travers l'application du procédé de création de contenus multimédias.

12. Dispositif comportant des moyens pour la réalisation du procédé selon l'une des revendications précédentes.
